# FASCICULE DE BREVET EUROPEEN

(11) **EP 1 728 551 B1**
(45) Date de publication et mention de la délivrance du brevet: **11.02.2009**
(21) Numéro de dépôt: 06290885.0
(22) Date de dépôt: 24.05.2006
(51) Int. Cl.: B01J 20/18, C10G 25/05

(54) **Utilisation de zéolithes de type faujasite échangée au césium pour la désulfuration poussée de coupe essence**
Verwendung von mit Cesium ausgetauschten Zeolithen vom Faujasite-Typ zur Hochentschwefelung von Benzin
Use of cesium exchanged faujasite-type zeolites for the deep desulfurisation of gasoline

(30) Priorité: 02.06.2005 FR 0505677
(43) Date de publication de la demande: 06.12.2006
(73) Titulaire: Institut Français du Pétrole, 92852 Rueil Malmaison Cedex (FR)
(72) Inventeur: Thomas, Michel, 69003 Lyon (FR); Nicolaos, Alexandre, 69003 Lyon (FR)

(56) Documents cités:
- US-A- 4 188 285
- US-A- 5 057 473
- US-A- 5 068 483
- US-A1- 2002 009 404

## Description

### DOMAINE DE L'INVENTION

L'objet de l'invention est l'utilisation d'une zéolithe de type faujasite échangée partiellement avec du césium (Cs) pour réaliser la désulfuration poussée d'un mélange d'hydrocarbures, typiquement une essence dont les points d'ébullition sont compris entre 25°C et 300°C.

L'utilisation de ce type de zéolithe trouve particulièrement son application dans les procédés de désulfuration par adsorption des essences issues d'un procédé de craquage catalytique, notamment de craquage catalytique en lit fluide, de cokéfaction, de viscoréduction, de pyrolyse. Ces procédés de désulfuration par adsorption peuvent fonctionner en lit fixe ou en lit mobile simulé (noté en abrégé CCS), et l'adsorption peut être réalisée aussi bien en phase liquide qu'en phase gazeuse, de préférence en phase liquide.

Les futures spécifications sur les carburants automobiles prévoient une forte diminution de la teneur en soufre, notamment sur les essences. Cette diminution est principalement destinée à limiter la teneur en oxyde de soufre et d'azote dans les gaz d'échappement d'automobiles.

La législation européenne définit les spécifications des carburants essences qui sont depuis 2000 de 150 ppm en soufre, 1 % de benzène, 42 % d'aromatiques, 18 % d'oléfines, et seront en 2005 de 50 ppm de soufre, et 35 % d'aromatiques. Des évolutions analogues des normes existent également aux Etats-Unis qui prévoient en moyenne une production d'essence à 30 ppm de soufre d'ici 2004.

L'évolution des spécifications de teneur en soufre dans les carburants nécessite donc la mise au point de nouveaux procédés de désulfuration profonde des essences.

Les bases pour essences sont principalement constituées des essences dites de craquage, et principalement de la fraction essence issue du procédé de craquage catalytique d'un résidu de distillation atmosphérique ou sous vide d'un pétrole brut (procédé souvent appelé FCC, abréviation de fluid catalytic craking, qu'on peut traduire par procédé de craquage en lit fluidisé).

La fraction d'essence issue du craquage catalytique, qui représente en moyenne 40 % des bases essence, contribue en effet pour plus de 90 % à l'apport de soufre dans lesdites essences.

Par conséquent, la production d'essences peu soufrées nécessite une étape de désulfuration des essences de craquage catalytique. Parmi les autres essences riches en soufre, citons également les essences de cokage, le cokage étant un procédé thermique s'appliquant à une charge de type résidu sous vide, produisant une essence aromatique et à forte teneur en soufre et, dans une moindre mesure, les essences directement issues de la distillation atmosphérique ou les essences de vapocraquage.

En fait la présente invention s'applique préférentiellement à toute coupe essence de point de coupe compris entre 25°C et 300°C.

### EXAMEN DE L'ART ANTERIEUR:

A l'heure actuelle, la désulfuration des essences est classiquement réalisée en une ou plusieurs étapes de mise en contact des composés soufrés contenus dans lesdites essences avec un gaz riche en hydrogène dans un procédé dit d'hydrodésulfuration dans lequel le soufre organique est transformé en sulfure d'hydrogène (H₂S), lui même séparé ensuite de l'essence désulfurée par dégazage.

Parmi les autres voies de désulfuration des essences, on connaît des procédés de purification d'essences par adsorption des composés soufrés sur un adsorbant sélectif.

A titre d'exemple, le brevet US 3,620,969 recommande l'utilisation d'une zéolithe de type X, Y, L ou oméga pour désulfurer par adsorption un hydrocarbure liquide.

Le brevet US 6,428,685 recommande la mise en contact d'un solide spécifique à base de silice, alumine et d'oxyde de zinc, additivé de calcium, contenant un promoteur comprenant du nickel dont la valence a été ramenée à une valeur inférieure ou égale à 2, pour désulfurer une essence de FCC ou un gazole.

A notre connaissance, l'utilisation d'une zéolithe de type faujasite, partiellement échangée au césium, comme solide adsorbant pour effectuer une désulfuration profonde d'essence n'a donc pas été décrite dans l'art antérieur.

### DESCRIPTION SOMMAIRE DE L'INVENTION

La présente invention se rapporte tout d'abord à une zéolithe faujasite de type X ou Y ou LSX, de formule générale M_{x/n}[(AlO₂)ₓ][(SiO₂)_{y}].zH₂O, dont le cation M est partiellement échangé au césium.

L'invention se rapporte également à un procédé de désulfuration d'une coupe essence de point d'ébullition compris entre 25°C et 300°C, utilisant comme solide adsorbant ladite zéolithe partiellement échangée au césium.

L'invention concerne enfin une méthode de préparation de ladite zéolithe à partir d'une zéolithe faujasite de type X, Y, ou LSX.

Selon l'invention, on décrit une zéolithe de type faujasite de formule générale M_{x/n}[(AlO₂)ₓ][(SiO₂)_{y}].zH₂O, de rapport Si/Al compris entre 1 et 10, et préférentiellement compris entre 1 et 3, le cation M étant partiellement échangé par du césium, le taux d'échange étant compris entre 2 % et 98 %, préférentiellement compris entre 20 % et 80 %, et de manière encore préférée compris entre 30 % et 70 %, possédant un volume de méso et macroporosité compris entre 0,25 cm³/g et 0,40 cm³/g, et un volume de microporosité compris entre 0,12 cm³/g et 0,35 cm³/g , et une taille de cristaux inférieure à 3 microns, préférentiellement inférieur à 2 microns.

Le procédé de désulfuration dans lequel sera mis en oeuvre la zéolithe faujasite partiellement échangée au césium selon l'invention, est un procédé de désulfuration poussée d'une coupe essence de point d'ébullition compris entre 25°C et 300°C, ou de toute coupe extraite de ladite coupe essence, faisant appel à une adsorption sur ladite zéolithe de type faujasite de type X ou Y, de formule générale M_{x/n}[(AlO₂)ₓ][(SiO₂)_{y}].zH₂O.

Le procédé dans lequel sera mis en oeuvre la zéolithe faujasite partiellement échangée au césium selon l'invention, peut être un procédé en lit fixe, ou en lit mobile ou encore en lit mobile simulé selon l'enseignement du brevet FR 2 785 196.

La méthode de préparation de la zéolithe faujasite partiellement échangée au césium selon l'invention, est décrite dans la description détaillée de l'invention.

### DESCRIPTION DETAILLEE DE L'INVENTION

La désulfuration des essences de FCC vise essentiellement à éliminer les composés soufrés, présents notamment sous forme de thiophène et de benzothiophène, ces composés pouvant éventuellement être alkylés.

La présence d'oléfines et d'aromatiques dans la charge à traiter donne lieu à une adsorption compétitive avec les dérivés soufrés, ce qui se traduit par une diminution de la capacité d'adsorption vis-à-vis des dérivés soufrés.

L'intérêt selon l'invention d'utiliser une zéolithe faujasite comme solide adsorbant est de limiter les effets de coadsorption des molécules oléfiniques et aromatiques de la charge, et d'accroître ainsi la sélectivité d'adsorption vis-à-vis des dérivés sulfurés présents dans la charge à traiter, notamment les dérivées thiophéniques.

La désulfuration poussée peut être de préférence réalisée sur la totalité d'une essence comprenant des composés ayant des points d'ébullition compris entre 25°C et 300°C (également appelée coupe 25°C-300°C), ou sur une partie seulement de ladite essence, notamment sur une coupe légère, par exemple une coupe 25°C-100°C.

En effet, selon le point de coupe de l'essence de FCC considérée, les teneurs approximatives des diverses familles chimiques, et notamment les composés soufrés, varient de façon importante selon le tableau ci dessous, donné seulement à titre d'exemple et nullement limitatif :

**Essence de FFC : composition typique (% massique)**

| *Fractions* | *Essence complète* | *Coupe PI-53°C* | *Coupe PI-* 90°C |
|---|---|---|---|
| Saturés n-P | 5,82 | 9,48 | 7,39 |
| Saturés i-P | 22,69 | 28,77 | 30,18 |
| Naphtènes | 6,50 | 1,46 | 7,36 |
| Oléfines | 40,25 | 60,25 | 52,74 |
| Aromatiques | 24,75 | 0,04 | 2,34 |
| Soufrés (ppm) | 445 | 2 | 97 |

Il est ainsi possible, en choisissant le point de coupe, de récupérer dans la fraction légère de l'essence la majorité des composés thiophène et méthylthiophène, conjointement avec une grande partie des composés oléfiniques, tout en limitant la quantité de composés aromatiques.

Ces derniers sont en effet connus pour être des composés fortement adsorbés sur les zéolithes classiques utilisées dans les procédés de séparation par adsorption. Ils sont donc des compétiteurs des composés soufrés dans le processus d'adsorption.

Il est de la pratique de l'homme du métier de choisir correctement le point de coupe de l'essence à traiter de manière à minimiser la fraction de composés aromatiques contenus dans ladite essence.

La présente invention peut donc s'appliquer, soit à l'intégralité de la coupe essence, soit à une fraction de ladite coupe essence dans laquelle se retrouve la majeure partie des composés soufrés.

L'utilisation d'une zéolithe particulière, de type faujasite, échangée partiellement au césium, permet notamment l'adsorption desdits composés thiophéniques, tout en limitant la coadsorption des composés oléfiniques et aromatiques présents dans la charge à traiter.

Les zéolithes de la famille des faujasites obéissent à la formule générale suivante :

M_{x/n}[(AlO₂)ₓ][(SiO₂)_{y}].zH₂O

dans laquelle x et y sont des entiers, n la valence du cation M, z le nombre de molécules d'eau par maille élémentaire.

Les zéolithes de type faujasite pour lesquelles le rapport molaire Si/Al (y/x) est inférieur à 1,15 sont traditionnellement désignées par le terme faujasites X, celles dont le rapport molaire Si/Al est supérieur à 1,15 par le terme faujasites Y, et celles dont le rapport Si/Al est égal à 1 sont appelées LSX.

Préférentiellement ce rapport Si/Al (molaire) sera compris entre 1 et 10, et de manière encore préférée compris entre 1 et 3.

Le cation M, qui assure l'électroneutralité de la structure de la zéolithe, appartient généralement aux groupes alcalins et/ou alcalino-terreux. Généralement, les cations les plus couramment utilisés sont le sodium, le calcium et le baryum.

Il a été découvert de manière surprenante que l'utilisation de césium comme cation d'échange sur une zéolithe de type faujasite, permet d'augmenter significativement la sélectivité d'adsorption des dérivés thiophéniques contenus dans une essence, en particulier une essence de FCC, par rapport à l'adsorption des composés aromatiques, notamment de type BTX, et des oléfines contenues dans ladite essence.

La méthode d'échange de la zéolithe de type faujasite qui permet de passer du cation d'origine M au Césium est décrite plus loin dans le texte. Cette méthode permet de réaliser un taux d'échange quelconque entre le cation d'origine M et le césium.

On appelle taux d'échange le pourcentage massique de césium par rapport à la masse de cation d'origine M.

Selon l'invention, le taux d'échange peut être fixé à une valeur quelconque entre 2 % et 98 %, et sera préférentiellement fixé à une valeur comprise entre 20 % et 80 %, et de manière encore préférée entre 30 % et 70 %.

L'échange cationique est par exemple effectué en mettant en contact une zéolithe faujasite de type NaLSX, de type NaX, dénommée classiquement 13X, ou de type NaY, avec une solution aqueuse de sel de césium. Ledit sel est de préférence choisi dans le groupe constitué par : le chlorure, le bromure, le fluorure, l'iodure, le nitrate ou le sulfate.

Dans la suite du texte, lorsqu'on parlera sans autre précision de zéolithe de type faujasite, on entendra un quelconque des types NaLSX, NaX ou NaY.

Préférentiellement, le sel de césium est le chlorure de césium qui présente une solubilité élevée dans l'eau à température ambiante, typiquement de l'ordre de 10 moles/kg.

L'échange peut être effectué sur de la zéolithe initialement en poudre, ou déjà mise en forme, par exemple sous forme de billes ou d'extrudés. Préférentiellement, l'échange sera réalisé sur la zéolithe Na LSX, NaX ou NaY déjà mis en forme, par exemple sous forme de billes ou d'extrudés.

La durée du contact nécessaire à l'échange est typiquement inférieure à 24 heures, préférentiellement inférieure à 12 heures, et préférentiellement encore inférieure à 4 heures.

La température d'échange est préférentiellement comprise entre la température ambiante et 90 °C, et de manière encore préférée comprise entre la température ambiante et 60 °C.

L'échange ionique peut être effectué en mode statique (dit mode "batch") ou en mode dynamique (selon la technique de la percolation par exemple).

En mode statique et/ou dynamique, plusieurs échanges successifs peuvent être nécessaires pour atteindre des taux d'échange élevés, typiquement supérieurs à 50 %.

Selon les conditions de température, de concentration en sel de césium, et selon la nature de l'anion, du ratio masse de zéolithe sur volume de solution d'échange, il est possible de faire varier le taux d'échange des cations initiaux de la zéolithe, comme par exemple le sodium, par des cations césium.

Après échange, la zéolithe échangée est lavée à l'eau, puis séchée à température modérée, typiquement inférieure à 100 °C, préférentiellement sous balayage de gaz inerte, comme par exemple de l'azote.

Une étape de calcination à haute température est ensuite réalisée pour favoriser la mise en place définitive des cations d'échange. La température de cette étape de calcination est préférentiellement inférieure à 500 °C. Cette étape de calcination est réalisée sous un balayage de gaz inerte (par exemple de l'azote) ou sous air, éventuellement appauvri.

La mise en forme de la zéolithe peut se faire avant ou après l'échange au césium.

Si l'échange a été effectué sur de la zéolithe initialement sous forme de poudre, celle ci peut être mise en forme après échange au césium, à l'aide d'un liant, selon les techniques usuelles connues de l'homme du métier, comme l'extrusion ou la granulation.

La mise en forme, généralement par extrusion ou granulation selon des techniques bien connues de l'homme du métier, peut également être réalisée à partir d'une zéolithe en poudre, avant l'échange au césium.

Que la mise en forme ait lieu avant ou après l'échange au césium, la teneur en liant utilisé pour effectuer ladite mise en forme est préférentiellement inférieure à 40 % poids, et préférentiellement inférieure à 20 % poids. Par liant, on entend généralement une argile, par exemple de type kaolinite, éventuellement zéolithisable, ce qui signifie qu'il est possible dans une étape ultérieure de transformer le liant en zéolithe.

Préférentiellement, le diamètre moyen des grains du solide adsorbant, déterminé par exemple par tamisage sur tamis calibré, ou par les techniques de granulométrie laser, est inférieur à 5 mm, préférentiellement inférieur à 2 mm, et préférentiellement compris entre 0,45 mm et 0,95 mm.

Le diamètre moyen des cristaux de zéolithe est préférentiellement inférieur à 3 microns (déterminé par exemple par microscopie électronique à balayage) et préférentiellement inférieur à 2 microns.

Ce paramètre est définit par le choix de la zéolithe Na LSX, NaX ou NaY initiale.

La méso et macro porosité du solide adsorbant, mesurée par la technique usuelle de porosimétrie au mercure, doit être préférentiellement comprise, selon le taux de liant utilisé, entre 0,25 cm³/g et 0,40 cm³/g.

La microporosité du solide adsorbant, mesurée par la technique usuelle de porosimétrie à l'azote à 77 K, est typiquement comprise, selon le taux d'échange cationique, et suivant le taux de liant utilisé, entre 0,12cm³/g et 0,35 cm³/g.

Avant utilisation dans un procédé de désulfuration des essences de FCC, la zéolithe échangée au césium est activée à une température préférentiellement inférieure à 250 °C, sous balayage d'air ou préférentiellement de gaz inerte, de manière à obtenir une teneur en eau résiduelle de la zéolithe échangée au césium, encore appelée «perte au feu», inférieure à 5 % massique, et préférentiellement inférieure à 2 % massique.

### EXEMPLES (selon l'invention):

Dans les exemples 1, 2, 3 et 4 qui suivent, on compare les sélectivités d'adsorption de zéolithes NaX et NaY, avec celles de leurs dérivés substitués au césium, respectivement CsX et CsY.

Le point a) est consacré à la méthode de préparation des zéolithes au césium.

Le point b) décrit la méthode analytique utilisée pour mesurer les sélectivités d'adsorption. Ces points a) et b) sont communs aux exemples 1, 2, 3 et 4.

### a) Préparation des zéolithes CsX et CsY

La préparation des zéolithes est réalisée à partir de zéolithes NaX (produites par la société Ceca) ou NaY (produite par la société Zeolyst), mises en forme sous forme de billes de diamètre inférieur à 1 mm, par échange cationique à l'aide d'une solution aqueuse de chlorure de césium (CsCl), dont la concentration est de 0,5 mole/litre.

Un volume de 10 millilitres de solution de CsCl par gramme de zéolithe NaX ou NaY est utilisé pour tous les échanges. L'échange est effectué à température ambiante, sous agitation pendant 2 heures.

La zéolithe échangée est ensuite lavée à l'eau, puis récupérée par filtrage et séchée à 80 °C pendant 18 heures. Une étape de calcination est ensuite effectuée pendant 1 heures à 500 °C sous balayage d'air.

Avant utilisation, les zéolithes NaX ou NaY sont activées sous un vide de 10⁻³ mm de mercure, à 350 °C, pendant heures, puis refroidies à température ambiante, afin d'obtenir une teneur en eau résiduelle inférieure à 2 % massique.

Les zéolithes ainsi obtenues ont les caractéristiques analytiques suivantes:
- Le volume microporeux et la surface spécifique des zéolithes sont mesurés par la technique classique de physisorption d'azote à 77 K
- Les analyses élémentaires (Al, Si, Na, Cs) sont effectuées par la technique d'absorption atomique.
- La taille moyenne des cristaux de zéolithe, déterminée par microscopie électronique à balayage, est de 2,5 microns.

**Tableau 1 : caractérisation des échantillons CsX et CsY**

| *Zéolithe* | *CsX* | *CsY* |
|---|---|---|
| Surface spécifique BET (m²/g) | 596 | 596 |
| Volume microporeux (cm³/g) | 0,237 | 0,237 |
| Taux d'échange Cs/Na (%) | 38 | 59 |

### b) Adsorption en conditions dynamiques

L'adsorption des dérivés soufrés est effectuée en dynamique, par la technique classique des courbes de perçage, en mode «échelon». L'appareillage utilisé est constitué par :
- une colonne en acier, d'un diamètre interne de 4,6 mm et d'une longueur de 150 mm, contenant en entrée du carborundum en grain pour favoriser un écoulement homogène dans la colonne, remplie de zéolithe à étudier (1 gramme environ).
- une pompe de type chromatographie liquide (modèle Gilson 307), permettant d'injecter un débit de charge dans la colonne constant, égal à 1 millilitre/minute.
- un débitmètre permettant de mesurer le débit de charge dans la colonne.
- un bac de charge, contenant la solution étudiée, reliée à la pompe d'injection.
- un collecteur de fraction, placé en sortie de colonne, pour effectuer les analyses des effluents récupérés en fonction du temps.

L'analyse des effluents recueillis est effectuée par chromatographie liquide, avec une colonne de type Lichrospher RP18 sous un débit de 1 ml/min, avec détection par UV-visible (modèle Varian Prostar 340), selon les conditions suivantes :
- solution thiophène/heptane : 100 µl (1 µl = 1 micro litre, soit 10⁻⁶ litre) de solution, dilués dans 1 ml de méthanol, à la longueur d'onde de 231 nm (1 nm = 1 nanomètre soit 10⁻⁹ mètre).
- solution en présence de toluène : la dilution est effectuée dans un mélange eau/méthanol (70 %/30 % en volume), à la même longueur d'onde.

Les quantités adsorbées sont calculées à partir du temps moyen de perçage des différents composés.

### Exemple 1 :

Dans cet exemple, nous comparons l'influence des cations Na et Cs dans des zéolithes X ou Y sur l'adsorption du thiophène en solution dans le n-heptane, à la concentration de 25 millimoles/litre de thiophène (1174 ppm massique de S équivalent), en l'absence de tout autre composé compétiteur (oléfine et aromatique), à température ambiante. Les résultats des capacités d'adsorption du thiophène sur les zéolithes NaX et CsX d'une part, NaY et CsY d'autre part, sont indiqués dans le tableau 2.

**Tableau 2 : adsorption du thiophène sur diverses zéolithes**

| *Zéolithe* | *NaX* | *CsX* | *NaY* | *CsY* |
|---|---|---|---|---|
| Thiophène adsorbé (mg/g) | 172,2 | 105,0 | 239,4 | 145,3 |
| Thiophène adsorbé (mmol/g) | 2,05 | 1,25 | 2,85 | 1,73 |

La diminution de la capacité d'adsorption sur les zéolithes CsX et CsY provient de la masse molaire très élevée du cation Cs, et de son encombrement, par rapport au cation sodium. Il convient de noter que la capacité d'adsorption ne doit pas être appréciée en tant que telle, mais en présence d'un agent compétiteur, de manière à faire ressortir le gain en sélectivité dû à l'échange au césium, comme cela est montré dans l'exemple suivant.

### Exemple 2 :

Dans cet exemple, nous comparons l'influence des cations Na et Cs dans des zéolithes X ou Y sur l'adsorption du thiophène en solution dans le n-heptane, à la concentration de 25 millimoles/litre de thiophène, en présence d'une quantité équimolaire de toluène comme agent compétiteur, à température ambiante.

Les résultats des capacités d'adsorption du thiophène sur les zéolithes NaX et CsX d'une part, NaY et CsY d'autre part, sont indiqués dans le tableau 3.

**Tableau 3 : adsorption du thiophène en présence de toluène sur diverses zéolithes**

| *Zéolithe* | *NaX* | *CsX* | *NaY* | *CsY* |
|---|---|---|---|---|
| Thiophène adsorbé (mg/g) | 126,8 | 104,2 | 82,3 | 115,9 |
| Thiophène adsorbé (mmol/g) | 1,51 | 1,24 | 0,98 | 1,38 |
| Toluène adsorbé (mg/g) | 110,4 | 31,3 | 185,8 | 41,4 |
| Toluène adsorbé (mmol/g) | 1,20 | 0,34 | 2,02 | 0,45 |
| Sélectivité thiophène/toluène | 1,21 | 4,48 | 0,50 | 3,07 |

Ces résultats font apparaître très nettement l'effet bénéfique de l'échange au césium sur la sélectivité d'adsorption du thiophène vis-à-vis du toluène.

### Exemple 3 :

Dans cet exemple, nous comparons l'influence des cations Na et Cs dans des zéolithes de la famille X ou Y sur l'adsorption du thiophène en solution dans un mélange équimolaire (1 mole/1 mole) de n-heptane/hexène-1, à la concentration de 25 millimoles/litre de thiophène, à température ambiante. Les résultats des capacités d'adsorption du thiophène sur les zéolithes NaX et CsX d'une part, NaY et CsY d'autre part, sont indiqués dans le tableau 4.

**Tableau 4 : adsorption du thiophène en présence de hexène-1 sur diverses zéolithes**

| *Zéolithe* | *NaX* | *CsX* | *NaY* | *CsY* |
|---|---|---|---|---|
| Thiophène adsorbé (mg/g) 0% hexène-1 . | 172,2 | 105,0 | 239,4 | 145,3 |
| Thiophène adsorbé (mmol/g) 0% hexène-1 | 2,05 | 1,25 | 2,85 | 1,73 |
| Thiophène adsorbé (mg/g) 50 % hexène-1* | 65,5 | 82,3 | 92,4 | 110,9 |
| Thiophène adsorbé (mmol/g) 50 % hexène-1* | 0,78 | 0,98 | 1,10 | 1,32 |
| Ratio de capacité d'adsorption (%) | 38,0 | 78,4 | 38,6 | 76,3 |

| | | | | |
|---|---|---|---|---|
| * mélange équimolaire n heptane / hexène-1 | | | | |

Ces résultats montrent l'effet bénéfique du césium sur l'adsorption du thiophène dans un mélange riche en hexène-1, la baisse de capacité étant beaucoup plus limité avec ces zéolithes échangées.

### Exemple 4 :

Dans cet exemple, nous comparons l'influence des cations Na et Cs dans des zéolithes de la famille X ou Y sur l'adsorption du thiophène en solution dans le n-heptane, en présence de hexène-1 et de toluène (0,188 mole/litre et 4,0 moles/litre, soit respectivement 2,6 % et 49,8 % poids), à la concentration de 25 millimoles/litre de thiophène, à température ambiante. Les résultats des capacités d'adsorption du thiophène sur les zéolithes NaX et CsX d'une part, NaY et CsY d'autre part, sont indiqués dans le tableau 5.

**Tableau 5 : adsorption du thiophène en présence de hexène-1 et de toluène sur diverses zéolithes**

| *Zéolithe* | *NaX* | *CsX* | *NaY* | *CsY* |
|---|---|---|---|---|
| Thiophène adsorbé (mg/g) | 47,4 | 69,3 | 29,2 | 55,4 |
| Thiophène adsorbé (mmol/g) | 0,564 | 0,825 | 0,348 | 0,660 |
| Hexène adsorbé (mg/g) | 21,0 | 0,4 | 44,7 | 0,8 |
| Hexène adsorbé (mmol/g) | 0,250 | 0,005 | 0,532 | 0,010 |
| Toluène adsorbé (mg/g) | 159,2 | 88,3 | 204,2 | 97,5 |
| Toluène adsorbé (mmol/g) | 1,73 | 0,96 | 2,22 | 1,06 |
| Thiophène QadsCsX(Y)/QadsNaX(Y) (%)* | / | 146,2 | / | 189,7 |

| | | | | |
|---|---|---|---|---|
| *Rapport multiplié par 100, des quantités adsorbées sur CsX (ou CsY) par rapport à celle adsorbée sur NaX (ou NaY). | | | | |

Ces résultats indiquent clairement l'effet bénéfique de l'échange au césium sur l'adsorption du thiophène en solution dans un mélange représentatif d'une essence légère de FCC, puisque la quantité de thiophène adsorbée augmente sur les zéolithes échangées au césium, au détriment de la quantité d'oléfine et d'aromatique.

## Revendications

1. Procédé de désulfuration poussée d'une coupe essence faisant appel à une adsorption sur une zéolithe de type faujasite, de formule générale M_{x/n}[(AlO₂)ₓ][(SiO₂)_{y}].zH₂O, dont le rapport molaire Si/Al est compris entre 1 et 10, le cation M étant partiellement échangé par du césium, le taux d'échange étant compris entre 2 % et 98 %, possédant un volume de méso et macroporosité compris entre 0,25 et 0,40 cm³/g, un volume de microporosité compris entre 0,12 et 0,35 cm³/g et une taille de cristaux inférieure à 3 microns.

2. Procédé de désulfuration selon la revendication 1 dans lequel le rapport molaire Si/AI est compris entre 1 et 3.

3. Procédé de désulfuration selon l'une des revendications 1 ou 2 dans lequel le taux d'échange est compris entre 20 % et 80 %.

4. Procédé de désulfuration selon l'une des revendications 1 à 3 dans lequel la taille de cristaux est inférieure à 2 microns

5. Procédé de désulfuration selon l'une des revendications 1 à 4 dans lequel la taille des particules d'adsorbant utilisé est inférieur à 5 mm.

6. Procédé selon l'une des revendications 1 à 5 dans lequel ladite coupe essence comprend des composés ayant des points d'ébullition compris entre 25 et 300 °C.

7. Procédé de désulfuration selon l'une des revendications 1 à 6 dans lequel la zéolithe faujasite partiellement échangée au césium est préparée par:
1) mise en contact d'une zéolithe faujasite, préférentiellement sous forme sodique, avec une solution aqueuse de sel de césium pendant un temps de contact inférieur à 24 heures et à une température comprise entre la température ambiante et 90 °C,
2) lavage à l'eau, puis séchage à température inférieure à 100 °C, sous balayage de gaz inerte.
3) calcination à haute température, la température de ladite étape de calcination étant préférentiellement inférieure à 500 °C.

8. Procédé de désulfuration selon la revendication 7 dans lequel le sel de césium est choisi dans le groupe constitué par: le chlorure, le bromure, le fluorure, l'iodure, le nitrate ou le sulfate de césium.

9. Procédé de désulfuration selon la revendication 7 dans lequel la zéolithe est initialement en poudre, échangée au césium, puis est mise en forme, par extrusion ou granulation, après échange au césium, la teneur en liant utilisé pour effectuer ladite extrusion ou ladite granulation étant inférieure à 40 % poids.

10. Procédé de désulfuration selon la revendication 7 dans lequel la zéolithe est initialement en poudre, puis est mise en forme, par extrusion ou granulation avant l'échange au césium, la teneur en liant utilisé pour effectuer ladite extrusion ou ladite granulation étant inférieure à 40 % poids.

11. Procédé de désulfuration selon la revendication 7 dans lequel avant utilisation la zéolithe est activée de manière que la perte au feu soit inférieure à 5 % poids.

12. Procédé de désulfuration selon la revendication 7 dans lequel le sel de césium en solution aqueuse est le chlorure de césium.

## Claims

1. A process for the intense desulphurization of a gasoline cut, employing adsorption onto a faujasite type zeolite with general formula M_{x/n}[(AlO₂)ₓ][(SiO₂)ₓ].zH₂O, wherein the mole ratio Si/A1 is in the range 1 to 10, the cation M being partially exchanged with caesium, the degree of exchange being in the range 2% to 98%, having a meso- and macroporous volume in the range 0.25 to 0.40 cm³/g, a micropore volume in the range 0.12 to 0.35 cm³/g and a crystal size of less than 3 microns.

2. A desulphurization process according to claim 1, in which the Si/Al molar ratio is in the range 1 to 3.

3. A desulphurization process according to claim 1 or claim 2, in which the degree of exchange is in the range 20% to 80%.

4. A desulphurization process according to one of claims 1 to 3, in which the crystal size is less than 2 microns.

5. A desulphurization process according to one of claims 1 to 4, in which the particle size of the adsorbent used is less than 5 mm.

6. A process according to one of claims 1 to 5, in which said gasoline cut comprises compounds having boiling points in the range 25°C to 300°C.

7. A desulphurization process according to one of claims 1 to 6, in which the faujasite zeolite partially exchanged with caesium is prepared by:
1) bringing a faujasite zeolite, preferably in the sodium form, into contact with an aqueous solution of a caesium salt for a contact period of less than 24 hours and at a temperature in the range from ambient temperature to 90°C;
2) washing with water, then drying at a temperature of less than 100°C, while flushing with an inert gas;
3) calcining at high temperature, the temperature of said calcining step preferably being less than 500°C.

8. A desulphurization process according to claim 7, in which the caesium salt is selected from the group constituted by: caesium chloride, bromide, fluoride, iodide, nitrate or sulphate.

9. A desulphurization process according to claim 7, in which the zeolite is initially a powder, exchanged with caesium, then is shaped by extrusion or granulation after caesium exchange, the quantity of binder used to carry out said extrusion or said granulation being less than 40% by weight.

10. A desulphurization process according to claim 7, in which the zeolite is initially a powder, then is shaped by extrusion or granulation before caesium exchange, the quantity of binder used to carry out said extrusion or said granulation being less than 40% by weight.

11. A desulphurization process according to claim 7 in which, prior to use, the zeolite is activated such that the loss on ignition is less than 5% by weight.

12. A desulphurization process according to claim 7, in which the caesium salt in aqueous solution is caesium chloride.

## Patentansprüche

1. Verfahren zur Hochentschwefelung eines Benzinschnitts, indem dieser einer Adsorption auf einem Zeolithen vom Faujasit-Typ mit der allgemeinen Formel M_{x/n}[(AlO₂)ₓ][(SiO₂)_{y}].zH₂O unterzogen wird, dessen Si/AI-Molverhältnis im Bereich zwischen 1 und 10 liegt, wobei das Kation M teilweise mit Cäsium ausgetauscht ist, wobei die Austauschrate im Bereich zwischen 2 % und 98 % liegt, der ein Meso- und Makroporositätsvolumen im Bereich zwischen 0,25 und 0,40 cm³/g, ein Mikroporositätsvolumen im Bereich zwischen 0,12 und 0,35 cm³/g und eine Kristallgröße von weniger als 3 Mikron besitzt.

2. Verfahren zur Entschwefelung nach Anspruch 1, wobei das Si/AI-Molverhältnis im Bereich zwischen 1 und 3 liegt.

3. Verfahren zur Entschwefelung nach einem der Ansprüche 1 oder 2, wobei die Austauschrate im Bereich zwischen 20 % und 80 % liegt.

4. Verfahren zur Entschwefelung nach einem der Ansprüche 1 bis 3, wobei die Kristallgröße weniger als 2 Mikron beträgt.

5. Verfahren zur Entschwefelung nach einem der Ansprüche 1 bis 4, wobei die Teilchengröße des verwendeten Adsorptionsmittels weniger als 5 mm beträgt.

6. Verfahren nach einem der Ansprüche 1 bis 5, wobei der Benzinschnitt Verbindungen umfasst, die Siedepunkte im Bereich zwischen 25 und 300 °C aufweisen.

7. Verfahren zur Entschwefelung nach einem der Ansprüche 1 bis 6, wobei der teilweise mit Cesium ausgetauschte Faujasit-Zeolith hergestellt wird durch:
1) Inkontaktbringen eines Faujasit-Zeolithen, bevorzugt in Salzform, mit einer wässrigen Cesiumsalzlösung während eines Kontaktzeitraums von weniger als 24 Stunden bei einer Temperatur im Bereich zwischen der Umgebungstemperatur und 90 °C,
2) Waschen mit Wasser, dann Trocknen bei einer Temperatur von weniger als 100 °C unter einem Inertgasstrom.
3) Kalzinieren bei hoher Temperatur, wobei die Temperatur des Kalzinierungsschritts bevorzugt weniger als 500 °C beträgt.

8. Verfahren zur Entschwefelung nach Anspruch 7, wobei das Cäsiumsalz ausgewählt ist aus der Gruppe bestehend aus: Cäsiumchlorid, -bromid, - fluorid, -iodid, -nitrat oder -sulfat.

9. Verfahren zur Entschwefelung nach Anspruch 7, wobei der Zeolith zuerst als Pulver vorliegt, mit Cäsium ausgetauscht wird, dann nach dem Austausch mit Cäsium durch Extrusion oder Granulation geformt wird, wobei der Gehalt an Bindemittel, das verwendet wird, um die Extrusion oder die Granulation durchzuführen, weniger als 40 Gew.-% beträgt.

10. Verfahren zur Entschwefelung nach Anspruch 7, wobei der Zeolith zuerst als Pulver vorliegt, dann vor dem Austausch mit Cäsium durch Extrusion oder Granulation geformt wird, wobei der Gehalt an Bindemittel, das verwendet wird, um die Extrusion oder die Granulation durchzuführen, weniger als 40 Gew.-% beträgt.

11. Verfahren zur Entschwefelung nach Anspruch 7, wobei der Zeolith vor der Verwendung aktiviert wird, so dass der Glühverlust weniger als 5 Gew.-% beträgt.

12. Verfahren zur Entschwefelung nach Anspruch 7, wobei das Cesiumsalz in wässriger Lösung Cäsiumchlorid ist.
